# EUROPÄISCHE PATENTSCHRIFT

(11) **EP 0 451 356 B1**
(45) Veröffentlichungstag und Bekanntmachung des Hinweises auf die Patenterteilung: **29.05.1996**
(21) Anmeldenummer: 90124418.6
(22) Anmeldetag: 17.12.1990
(51) Int. Cl.: G01F 1/66

(54) **Durchflussvolumenzähler**
Volume flowmeter
Débitmètre volumique

(30) Priorität: 10.04.1990 CH 1217/90
(43) Veröffentlichungstag der Anmeldung: 16.10.1991
(73) Patentinhaber: Landis & Gyr Technology Innovation AG, CH-6301 Zug (CH)
(72) Erfinder: Gross, Uwe, W-6000 Frankfurt (DE); Merkel, Jürgen, W-6450 Hanau (DE)
(74) Vertreter: Müller, Hans-Jürgen, Dipl.-Ing.

(56) Entgegenhaltungen:
- CH-A- 666 549
- DE-A- 3 734 635
- IRE TRANSACTIONS ON BIO MEDICAL ELECTRONICS vol. BME-9, no. 3, Juli 1962, Seiten 199-203; W.C. ZARNSTORFF et al.: "A PHASE-SHIFT ULTRASONIC FLOWMETER"

## Beschreibung

Die Erfindung bezieht sich auf einen Durchflußvolumenzähler gemäß dem Oberbegriff des Anspruchs 1, wie er beispielsweise in Wärmemengenzählern verwendet wird.

Ein Durchflußvolumenzähler der im Oberbegriff des Anspruchs 1 genannten Art ist aus der DE-PS 37 34 635 bekannt. Es wurde beobachtet, daß bei solchen Durchflußvolumenzählern ein kleiner Meßfehler auftritt, der von der Temperatur des durchfließenden Mediums abhängig ist.

Der Erfindung liegt die Aufgabe zugrunde, einen Durchflußvolumenzähler zu schaffen, bei dem dieser Fehler minimiert bzw. ganz eliminiert werden kann.

Die genannte Aufgabe wird erfindungsgemaß durch die Merkmale des Anspruchs 1 gelöst. Vorteilhafte Ausgestaltungen ergeben sich aus den Unteransprüchen.

Nachfolgend werden Ausführungsbeispiele der Erfindung anhand der Zeichnung näher erläutert. Die einzige Zeichnungsfigur zeigt ein Schema eines Durchflußvolumenzählers. Dabei wird nur beschrieben, welche Änderungen gegenüber dem technologischen Hintergrund, der DE-PS 37 34 635 erforderlich sind. Für die Gesamtbeschreibung der Funktionsweise eines solchen Durchflußvolumenzählers wird auf diese Schrift verwiesen.

In der Zeichnung bedeutet 1 ein Meßrohr, an dessen einem stirnseitigen Ende ein erster Meßwandler 2 plaziert ist und dem am anderen stirnseitigen Ende ein zweiter Meßwandler 3 gegenübersteht. Der Meßwandler 2, der zwei elektrische Anschlüsse a und b besitzt, ist über einen ersten Polwendeschalter 4 einerseits mit Masse, andererseits mit einem Ankoppelungsglied 5 verbunden. Analog dazu ist der Meßwandler 3, der ebenfalls zwei elektrische Anschlüsse a und b aufweist, über einen zweiten Polwendeschalter 6 einerseits mit Masse, andererseits mit einem zweiten Ankoppelungsglied 7 verbunden.

Die Ankoppelungsglieder 5 und 7 sind an ein Sendeglied 8 angeschlossen. Die meßwandlerseitigen Ausgänge der Ankoppelungsglieder 5 und 7 sind mit einem Meßglied 9 verbunden, das seinerseits mit einem Steuerglied 10 in Verbindung steht. Das Steuerglied 10 wirkt auf die beiden Polwendeschalter 4 und 6.

Das Steuerglied 10 ist jenes Steuerglied, das bei der DE-PS 37 34 635 den gesamten Ablauf der Meßzyklen steuert. Es ist allerdings nicht erforderlich, daß auch die Polwendeschalter 4 und 6 von diesem Steuerglied 10 gesteuert werden. Vielmehr kann auch ein beliebiger anderer Steuerschalter, beispielsweise ein Taktglied, die Ansteuerung vornehmen.

Das Sendeglied 8 erzeugt Impulse einer Sendefrequenz, die über die Ankoppelungsglieder 5 und 7 auf die Meßwandler 2 und 3 gelangen. Dabei wirken die Meßwandler 2, 3 als Sender. Nach dem Ende der Impulse wirken die Meßwandler 2, 3 als Empfänger, wobei der Meßwandler 2 die vom Meßwandler 3 zuvor gesendeten Impulse empfängt und entsprechend der Meßwandler 3 die vom Meßwandler 2 gesendeten Impulse aufnimmt.

In der Zeichnungsfigur sind zwei Polwendeschalter 4, 6 dargestellt. Die erfindungsgemäße Wirkung der Verbesserung des Temperaturgangs des Durchflußvolumenzählers läßt sich bereits erreichen, wenn nur einer der Meßwandler 2, 3 über einen Polwendeschalter 4, 6 an das Ankoppelungsglied 5 bzw. 7 angeschlossen ist, während der andere Meßwandler 3, 2 direkt einerseits an Masse, andererseits an das Ankoppelungsglied 7 bzw. 5 angeschlossen ist.

Es sei nun angenommen, der erste Meßwandler 2 sei über den Polwendeschalter 4 an das Ankoppelungsglied 5 und an Masse angeschlossen, während der zweite Meßwandler 3 mit seinem Anschluß a direkt mit Masse und mit seinem Anschluß b direkt mit dem Ankoppelungsglied 7 verbunden sei. Weiter sei angenommen, daß sich der Polwendeschalter 4 in der in der Zeichung dargestellten Stellung befinde, bei der der Anschluß a des Meßwandlers 2 an Masse liegt und der Anschluß b des Meßwandlers 2 mit dem Ankoppelungsglied 5 verbunden ist. Diese Stellung des Polwendeschalters 4 wird als Stellung I bezeichnet.

Das Sendeglied 8 sendet nun einen Impuls der Sendefrequenz, der beispielsweise aus 128 Perioden besteht. Dieser Impuls wird vom dem Meßwandlern 2 und 3 gleichzeitig in das Meßrohr 1 abgegeben. Nach dem Ende des Impulses empfangen die Meßwandler 2, 3 die jeweils vom gegenüberliegenden Meßwandler 3, 2 abgegebenen Impulse, deren einer durch die Strömung des im Meßrohr 1 fließenden Durchflußmediums verzögert wird, während der andere durch die Strömung des Durchflußmediums beschleunigt wird. Die empfangenen Impulse werden in bekannter Weise vom Meßglied 9 ausgewertet.

Nach dem Ende eines solchen Zyklus "Senden, Empfangen" wird nun der Polwendeschalter 4 durch das Steuerglied 10 in die Stellung II umgeschaltet, so daß anschließend der Anschluß a des Meßwandlers 2 mit dem Ankoppelungsglied 5 verbunden ist, während der Anschluß b an Masse liegt. Im Anschluß an dieses Umschalten erfolgt der nächste Zyklus "Senden, Empfangen". Während beider Zyklen werden die Einzelwerte durch das Meßglied 9 aufaddiert, wodurch automatisch eine Mittelwertbildung resultiert. Anschließend wird der Polwendeschalter 4 wiederum umgeschaltet und das Ganze wiederholt sich.

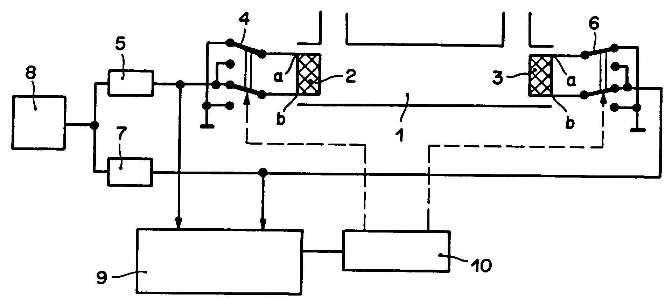

Vorteilhaft im Sinne einer weiteren Verbesserung des Temperaturgangs ist es, beide Meßwandler 2, 3 über Polwendeschalter 4, 6 an die Ankoppelungsglieder 5, 7 anzuschließen, wie das in der Fig. 1 dargestellt ist.

Ein erster Zyklus "Senden, Empfangen" läuft dabei ab, während sich beide Polwendeschalter 4, 6 in der Stellung I befinden. Dann werden beide Polwendeschalter 4, 6 in die Stellung II umgeschaltet und im Anschluß daran läuft ein nächster Zyklus "Senden, Empfangen" ab. Wiederum addiert das Meßglied 9 die Einzelwerte über beide Meßzyklen.

Vorteilhaft ist es, wenn nicht beide Polwendeschalter 4, 6 immer gleichzeitig umgeschaltet werden, sondern wenn sich eine Folge von vier Phasen dauernd wiederholt, wobei sich in der Phase a) beide Polaritätsumschalter 4, 6 in Stellung I befinden, in Phase b) der erste Polaritätsumschalter 4 die Stellung II hat, während sich der zweite Polaritätsumschalter 6 in Stellung I befindet, in Phase c) beide Polaritätsumschalter 4, 6 in Stellung II sind und sich in Phase d) der erste Polaritätsumschalter 4 in Stellung I und der zweite Polaritätsumschalter 6 in Stellung II befinden. Das Meßglied 9 addiert dann die Einzelwerte über diese vier Phasen, die sich dauernd wiederholen.

Es ist auch möglich, eine entsprechende Umschaltung mindestens eines Polaritätsumschalters 4, 6 innerhalb eines Impulses vorzunehmen, so daß beispielsweise während der ersten 64 Perioden mit Stellung I gesendet und während der nächsten 64 Perioden mit Stellung II gesendet wird und auch während des Empfangens ein Umschalten nach 64 Perioden stattfindet. Auch ist es möglich, je 32 Perioden mit einer der vier möglichen Phasen a) bis d) zu senden und zu empfangen.

Das erfindungsgemäße Prinzip der Polaritätsumschaltung der Meßwandler 2, 3 läßt sich auch bei solchen Durchflußvolumenzählern anwenden, bei denen immer nur jeweils einer der Meßwandler 2, 3 sendet und der zweite Meßwandler 3, 2 empfängt und umgekehrt.

Als Polaritätsumschalter 4, 6 lassen sich beispielsweise Analog-Multiplexer des bekannten Typs 74HC4052 verwenden.

Durchflußvolumenzähler der beschriebenen Arten lassen sich vorteilhaft zur Durchflußvolumenmessung bei Wärmemengenzählern einsetzen, weil gerade bei solchen unterschiedliche Temperaturen des Durchflußmediums auftreten, wobei sich der verbesserte Temperaturgang auf die Meßgenauigkeit positiv auswirkt.

## Patentansprüche

1. Elektronischer Durchflußvolumenzähler für flüssige Medien, mit einer Ultraschallmeßstrecke in einem Meßrohr (1) und zwei Meßwandlern (2, 3) für Ultraschall, einem eine Sendefrequenz erzeugenden Sendeglied (8), einem Meßglied (9), einem Steuerglied (10) und einem zwischen das Sende- bzw. Meßglied (8, 9) und mindestens einem der Meßwandler (2, 3) geschalteten Schalter,
**dadurch gekennzeichnet,**
daß der Schalter als Polaritätsumschalter (4; 6) ausgebildet und derart von einem Steuerschalter steuerbar ist, daß er die Polarität der Meßwandler (2, 3) umschaltet.

2. Durchflußvolumenzähler nach Anspruch 1, dadurch gekennzeichnet, daß der Polaritätsumschalter vom Steuerglied (10) steuerbar ist.

3. Durchflußvolumenzähler nach Anspruch 2, dadurch gekennzeichnet, daß zwischen das Sende- bzw. Meßglied (8; 9) und beide Mepwandler (2, 3) jeweils ein Polaritätsumschalter (4, 6) geschaltet ist.

4. Durchflußvolumenzähler nach Anspruch 3, dadurch gekennzeichnet, daß die Polaritätsumschalter (4; 6) durch das Steuerglied (10) nacheinander in die folgenden Stellungen steuerbar sind:
a) beide Polaritätsumschalter (4; 6) in eine erste Stellung,
b) erster Polaritätsumschalter (4) in eine zweite Stellung, zweiter Polaritätsumschalter (6) in die erste Stellung,
c) beide Polaritätsumschalter (4; 6) in die zweite Stellung,
d) erster Polaritätsumschalter (4) in die erste Stellung, zweiter Polaritätsumschalter (6) in die zweite Stellung.

## Claims

1. An electronic volume flowmeter for fluid media, comprising an ultrasound measuring section in a measuring pipe (1) and two measuring transducers (2, 3) for ultrasound, a transmitting member (8) producing a transmitting frequency, a measuring member (9), a control member (10) and a switch connected between the transmitting or measuring member (8, 9) respectively and at least one of the measuring transducers (2, 3), characterised in that the switch is in the form of a pole-reversing switch (4; 6) and is controllable by a control switch in such a way that it switches over the polarity of the measuring transducers (2, 3).

2. A volume flowmeter according to claim 1 characterised in that the pole-reversing switch is controllable by the control member (10).

3. A volume flowmeter according to claim 2 characterised in that a respective pole-reversing switch (4, 6) is connected between the transmitting and measuring members (8; 9) respectively and both measuring transducers (2, 3).

4. A volume flowmeter according to claim 3 characterised in that the pole-reversing switches (4; 6) are successively controllable into the following positions by the control member (10):
a) both pole-reversing switches (4; 6) into a first position,
b) first pole-reversing switch (4) into a second position and second pole-reversing switch (6) into the first position,
c) both pole-reversing switches (4; 6) into the second position, and
d) first pole-reversing switch (4) into the first position and second pole-reversing switch (6) into the second position.

## Revendications

1. Débitmètre volumique de type électronique pour milieux liquides, comprenant un trajet de mesure ultrasonore dans un tube de mesure (1) et deux transducteurs (2, 3) pour ultrasons, un élément d'émission (8) générant une fréquence d'émission, un élément de mesure (9), un élément de commande (10) et un interrupteur monté entre l'élément d'émission ou de mesure (8, 9) et au moins l'un des transducteurs (2, 3),
caractérisé en ce que
l'interrupteur est réalisé comme un inverseur de polarité (4; 6) et peut être commandé par un interrupteur de commande de manière qu'il commute la polarité des transducteurs (2, 3).

2. Débitmètre volumique selon la revendication 1, caractérisé en ce que l'inverseur de polarité peut être commandé par l'élément de commande (10).

3. Débitmètre volumique selon la revendication 2, caractérisé en ce qu'un inverseur de polarité (4, 6) est monté chaque fois entre l'élément d'émission ou de mesure (8; 9) et chacun des deux transducteurs (2, 3).

4. Débitmètre volumique selon la revendication 3, caractérisé en ce que les inverseurs de polarité (4; 6) peuvent être commandés successivement, par l'élément de commande (10), de manière qu'ils aient les positions suivantes:
a) les deux inverseurs de polarité (4; 6) occupent une première position,
b) un premier inverseur de polarité (4) occupe une seconde position et le second inverseur de polarité (6) occupe la première position,
c) les deux inverseurs de polarité (4; 6) occupent la seconde position,
d) le premier inverseur de polarité (4) occupe la première position et le second inverseur de polarité (6) occupe la seconde position.
